# EUROPEAN PATENT SPECIFICATION

(11) **EP 2 821 109 B1**
(45) Date of publication and mention of the grant of the patent: **13.01.2016**
(21) Application number: 14165876.5
(22) Date of filing: 24.04.2014
(51) Int. Cl.: A62C 27/00, A62C 3/02, F04D 29/70, F04D 29/60, B01D 47/06, E21F 5/02, B05B 7/00, B05B 7/24, B05B 1/20

(54) **A device for discharging a jet of fluid**
Vorrichtung zum Entladen eines Flüssigkeitsstrahls
Dispositif pour décharger un jet de fluide

(30) Priority: 15.05.2013 IT VR20130112
(43) Date of publication of application: 07.01.2015
(73) Proprietor: Technoalpin Holding S.p.A., 39100 Bolzano (IT)
(72) Inventor: Rieder, Walter, 39053 Bolzano (IT)
(74) Representative: Lissandrini, Marco

(56) References cited:
- IT-A1- VR20 110 189
- JP-A- H04 302 974
- JP-U- H0 536 273
- US-A1- 2007 186 778
- US-A1- 2010 252 284

## Description

This invention relates to a device for discharging a jet of fluid. More specifically, this invention relates to the sector for reducing dust and/or reducing odours and/or mitigating fires by discharging a jet of fluid.

More precisely, this invention relates to devices for discharging a jet of fluid in the shape of a "cannon" (referred to hereafter simply as "cannons") that is to say, comprising a tubular body in which a rotor (or spiral) is inserted and in which nozzles are inserted. More in detail, the rotor creates a flow of air inside the tubular body and the nozzles spray liquid (usually water) towards the flow of air in such a way as to create a jet comprising air and liquid.

According to the prior art, there are devices, of the above-mentioned type, which are capable of operating in a single sector amongst those identified above (for example, only for reducing dust or only for reducing odours or only for mitigating fires).

In other words, currently in the prior art there is a cannon-shaped device for reducing dust, a cannon-shaped device for reducing odours and a cannon-shaped device for mitigating fires which are separate from each other. In effect, each of these cannon-shaped devices has its own relative specifications.

For example, the cannon for reducing dust needs a specific fluid to be fed to the nozzles, containing suitable additives for reducing the dust. In addition, the fluid should be fed to the nozzles at a specific pressure necessary to optimise the operation of the cannon. In the same way, the other types of cannons are linked with other specific features (type of fluid to be fed to the nozzles, pressure of the fluid, etc.) according to the sector to which they are aimed. ITVR20110189 A1 shows all the features of the preamble of claim 1.

However, it is often necessary to have at least two (preferably three) of the above-mentioned devices at the same place.

For example, in the case of a waste disposal area it is often necessary to have available a device for reducing dust generated by incinerators or by waste made of very fine particles. At the same time, it is often necessary to have available at a waste disposal area a device for reducing odours generated by the waste (for example, of the organic type). Moreover, at the same time, it is often necessary to have available a device for mitigating fires which are often generated by the chemical overheating of organic waste located deep down.

In this situation, is therefore necessary to have at the same location three different cannons.

However, this prior art technique has several drawbacks.

More specifically, a first drawback is linked to the dimensions resulting from the sum of the volumes of the three cannons. In effect, it is not always possible to have available sufficient space to house the three cannons at the same location.

A second drawback is linked to the fact that it is often necessary to position the cannons in different places (preferably each where there is more probability of its use) and connect it to a source of water. Disadvantageously, it is not always possible to be find a source of water located in the proximity of each cannon. For this reason, it is often necessary to use extensions of connecting conduits which create obstructions in the place of installation.

Lastly, a third disadvantage is linked to the cost of purchase, control and maintenance of three different cannons.

In this situation the aim of this invention is to provide a device for discharging a jet of fluid which overcomes the aforementioned drawbacks. More specifically, the aim of this invention is to provide a device for discharging a jet of fluid which allows a reduction in the overall dimensions linked with the dispensing of fluids to reduce dust, reduce odours and mitigate fires.

Another aim of this invention is to provide a device for discharging a jet of fluid which can be easily positioned in a place to be treated.

Lastly, the aim of this invention is to provide a device for discharging a jet of fluid which has reduced costs compared with the prior art.

The aims indicated are substantially achieved by a device for discharging a jet of fluid as described in the appended claims.

Further characteristic features and advantages of this invention will emerge more clearly from the detailed description of several preferred, but not exclusive embodiments of a device for discharging a jet of fluid illustrated in the accompanying drawings, in which:
- Figure 1a is a side view of a device for discharging a jet of fluid according to this invention;
- Figure 1b is a side view of an alternative embodiment of the device of Figure 1 a;
- Figure 2 is an axonometric view of an alternative embodiment of the device for discharging a jet of fluid according to this invention; and
- Figure 3 is a side view of the device for discharging a jet of fluid mounted on a transport vehicle.

With reference to the accompanying drawings, the numeral 1 denotes in its entirety a device for discharging a jet of fluid according to this invention. More specifically, the device 1 comprises a tubular body 2 extending between a relative air inlet opening 3 and a relative air outlet opening 4 and forming internally a transit zone Z. Preferably, the tubular body 2 is a cylindrical body with a circular cross section or a body at least partly conical with a circular cross section.

Moreover, in the preferred embodiment, the inlet opening 3 and the outlet opening 4 are defined by respective opposite annular edges of the tubular body 2.

In addition, the device 1 comprises blowing means 5 operatively associated with the tubular body 2 for generating a flow of air along a direction of propagation P of the air from the inlet opening 3 to the outlet opening 4. In other words, the flow of air generated by the blowing means 5 propagates in the transit zone Z along the direction of propagation P. Preferably, the direction of propagation P is rectilinear. Moreover, in the preferred embodiment illustrated in the accompanying drawings, the blowing means 5 are mounted at the inlet opening 3 of the tubular body 2 and suck the air from the outside to blow it towards the inside of the tubular body 2.

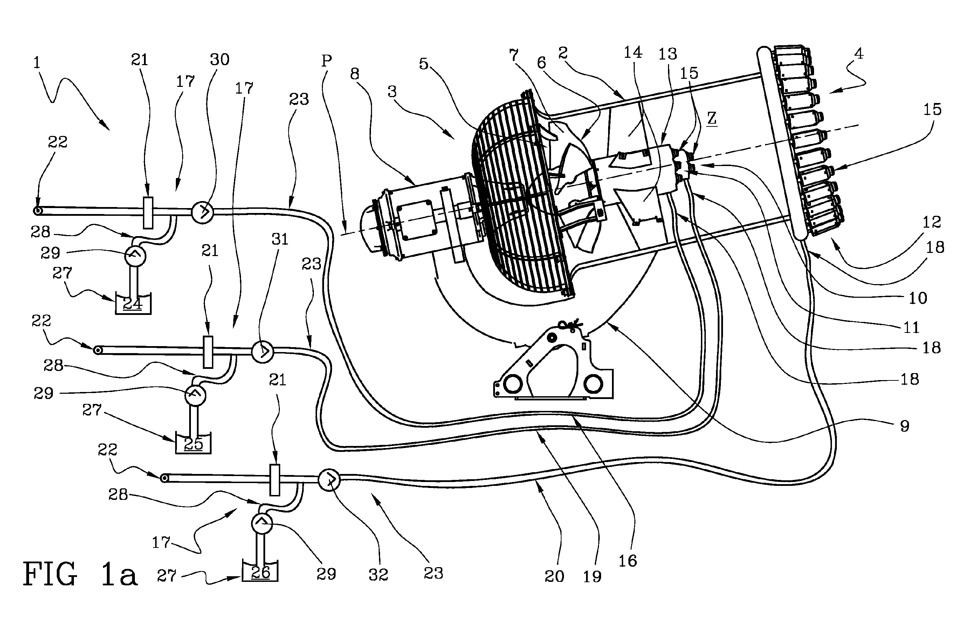

As is shown in Figure 1a, the blowing means 5 comprise a fan 6 which sucks the air from the outside environment and blows it inside the tubular body 2 towards the outlet opening 4. More in detail, the fan 6 comprises a plurality of blades 7 distributed substantially radially to the direction of propagation P.

In addition, the fan 6 is mechanically connected to a motor 8 which rotates it. Preferably, the fan 6 is positioned inside the tubular body 2. In other embodiments, the fan 6 could be mounted on the outside of the tubular body 2 at the inlet opening 3.

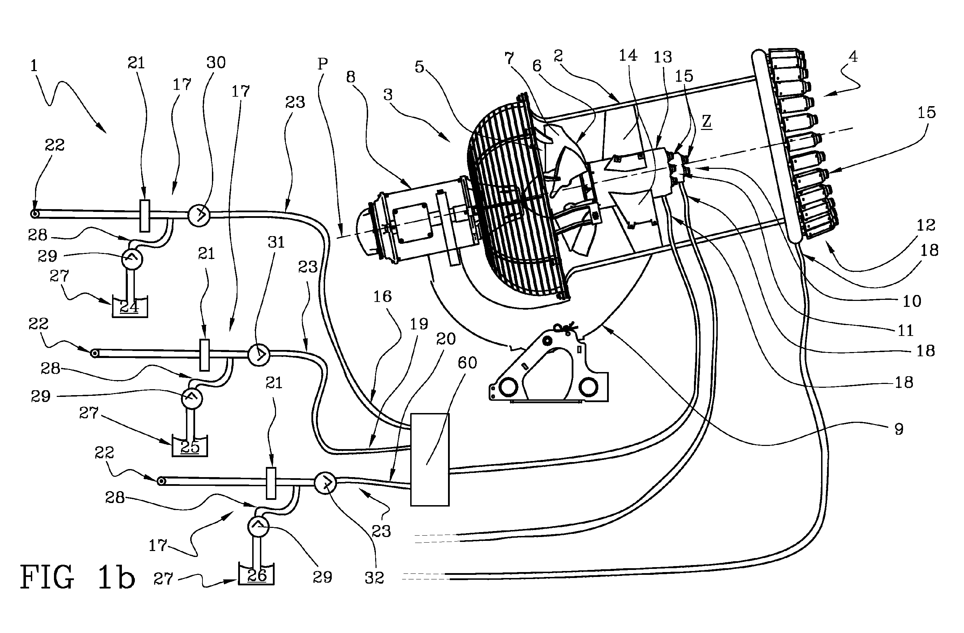

In the preferred embodiment, the motor 8 is mounted outside the tubular body 2 and in the proximity of the inlet opening 3. Figure 1 a shows that the motor 8 is mounted on a supporting structure 9 of the device 1 and is connected to the fan 6 by means of a rotary shaft. In other words, the motor 8 is aligned with the fan 6.

In other alternative embodiments, not illustrated in the accompanying drawings, the motor 8 is mounted inside the tubular body 2.

Moreover, the device 1 comprises a first group of nozzles 10 operatively associated with the tubular body 2 for spraying a first fluid towards the flow of air. The first group of nozzles 10 may be positioned inside the tubular body 2 (in the transit zone Z) or outside at the outlet opening 4. Moreover, the device 1 comprises a second group of nozzles 11 operatively associated with the tubular body 2 for spraying a second fluid towards the flow of air. The second group of nozzles 11 may also be positioned inside the tubular body 2 (in the transit zone Z) or outside at the outlet opening 4. Preferably, the device 1 comprises a third group of nozzles 12 operatively associated with the tubular body 2 for spraying a third fluid towards the flow of air. The third group of nozzles 12 may be positioned inside the tubular body 2 (in the transit zone Z) or outside at the outlet opening 4. Figure 1 a shows, by way of example, two groups of nozzles positioned inside the tubular body 2, and a group of nozzles positioned outside the tubular body 2 around the outlet opening 4. It should be noted that for implementing the invention at least two groups of nozzles are sufficient.

It should be noted that the groups of nozzles operate independently from each other.

More specifically, each group of nozzles positioned inside the tubular body 2 is preferably positioned centrally with respect to the tubular body 2 along a direction transversal to the direction of propagation P for spraying the fluid in the inner part of the air flow. More in detail, each group of nozzles is positioned downstream of the blowing means 5 according to the direction of propagation P of the air.

In other words, the group of nozzles is positioned centrally in such a way as to define at them a ring for the passage of the air flow between the group of nozzles and the tubular body 2. In yet other words, during operation, the flow of air moving along the direction of propagation P surrounds the group of nozzles and then re-forms after passing the first group of nozzles 10.

Advantageously, the internal group of nozzles allows the inner part of the air flow to be loaded with the first nebulised fluid in such a way as to mix the fluid with the air.

Preferably, the device 1 comprises a supporting head 13 for each group of nozzles positioned inside the tubular body 2. More specifically, the supporting head 13 is supported by a plurality of supporting wings 14 extending radially from it towards the tubular body 2 and connected to the latter. In other words, the supporting head 13 is positioned centrally with respect to the tubular body 2 along a direction transversal to the direction of propagation P. In yet other words, the supporting head 13 is suspended in the air inside the tubular body 2.

It should be noted that the supporting wings 14 are connected between the supporting head 13 and the tubular body 2 in such a way as to keep the supporting head 13 in position.

Preferably, the supporting head 13 is inserted in the transit zone Z. Advantageously, the supporting head 13 is cylindrical in shape and is aligned with the shaft along the direction of propagation P in such a way as to not interfere with the flow of air.

Preferably, at least one group of nozzles is positioned inside the tubular body 2 and downstream of the blowing means 5 according to the direction of propagation P of the air. In addition, at least one other group of nozzles is positioned outside the tubular body 2 around the outlet opening 4.

Each group of nozzles comprises a plurality of nebulising nozzles 15 facing towards the outlet opening 4 and in a direction incident with the direction of propagation P of the air flow in such a way as to spray towards the air flow. In effect, in that way, the fluid sprayed towards the air flow is transported by the latter towards the outlet opening 4 and then towards the outside of the device 1 in the direction of the zone to be treated. Advantageously, the nozzles 15 of each group have an adjustable orientation in such a way as to spray the fluid according to directions more or less angled with respect to the direction of propagation P.

Furthermore, the nozzles 15 of each group have a relative internal shape linked to the type of fluid to be nebulised. For example, the nozzles 15 of the first group 10 have an internal shape aimed at obtaining a nebulising which is finer than the nebulising of the nozzles 15 of the third group 12 (the air flow must be very loaded with water for extinguishing fires). Moreover, the device 1 comprises a first conduit 16 for conveying the first fluid extending from a relative inlet portion 17 for the first fluid to a relative outlet portion 18 connected to the first group of nozzles 10 for carrying the first fluid to the first group of nozzles 10. In that way, the first fluid is fed to the first group of nozzles 10 for spraying by the latter towards the flow of air.

In addition, the device 1 comprises a second conduit 19 for conveying the second fluid separated from the first conduit 16 and extending from a relative inlet portion 17 for the second fluid to a relative outlet portion 18 connected to the second group of nozzles 11 for carrying the second fluid to the second group of nozzles 11. In other words, the first conduit 16 carries the first fluid to the first group of nozzles 10, whilst the second conduit 19 carries the second fluid to the second group of nozzles 11.

In the preferred embodiment illustrated in Figure 1a, the device 1 also comprises a third conduit 20 for conveying a third fluid separated from the first conduit 16 and from the second conduit 19 and extending from a relative inlet portion 17 for the third fluid to a relative outlet portion 18 connected to the third group of nozzles 12 for carrying the third fluid to the third group of nozzles 12. In other words, in the preferred embodiment, the device 1 comprises three separate conduits in which three different fluids flow, respectively.

More specifically, the first fluid comprises an odour reducing solution or a dust reducing solution or a flame mitigating solution. The second fluid is different from the first fluid and comprises an odour reducing solution or a dust reducing solution or a flame mitigating solution. The third fluid is different from the first fluid and from the second fluid and comprises an odour reducing solution or a dust reducing solution or a flame mitigating solution.

In other words, a fluid comprises only one respective solution in such a way that the three fluids are different to each other.

By way of an example, it can be considered that the first fluid comprises the odour reducing solution, the second fluid comprises the dust reducing solution and the third fluid comprises the flame reducing solution. More specifically, as shown in the accompanying drawings, the first fluid flows in the first conduit 16 towards the first group of nozzles 10, the second fluid flows in the second conduit 19 towards the second group of nozzles 11 and the third fluid flows in the third conduit 20 towards the third group of nozzles 12.

Preferably, the odour reducing solution comprises a chemical substance linking with a respective odour molecule to be reduced in such a way as to cover or neutralize the odour emanated. For example, an odour reducing solution comprises radicals and/or essential oils and/or other not expressly mentioned herein.

Preferably, the dust reducing solution comprises a surface-active agent to lower the surface tension of the fluid in which the solution is mixed.

Preferably, the flame mitigating solution comprises foam in such a way as to favour the covering of the flames in an attempt to extinguish the fire. Alternatively, the flame mitigating solution can comprise fire prevention solutions commonly known as "retardant substances".

It should be noted that each fluid is preferably a liquid and comprises a percentage of a solution (odour reducing solution or dust reducing solution or flame mitigating solution) and water. In other words, each fluid comprises water mixed with a percentage of solution.

For example, the first fluid comprises water mixed with the odour reducing solution. The odour reducing solution is present in the first fluid with a percentage varying between 0.1 % and 3%.

The second fluid comprises water mixed with a dust reducing solution. The dust reducing solution is present in the second fluid with a percentage varying between 0.1 % and 5%.

The third fluid comprises water mixed with the flame mitigating solution. The flame mitigating solution is present in the third fluid with a percentage varying between 1 % and 6%. If the flame mitigating solution comprises (or consists of) the so-called "retardant substances", the latter are present in the third fluid with a percentage variable between 5% and 30%.

Moreover, the device 1 comprises valve means 21 interposed between the inlet portion 17 and the outlet portion 18 of each conduit and designed to select the dispensing of the first fluid from the first group of nozzles 10 or of the second fluid from the second group of nozzles 11 or of the third fluid from the third group of nozzles 12 in such a way as to configure the device 1, respectively, in the first mode of operation or in the second mode of operation or in a third mode of operation.

In other words, the valve means 21 are configured for selecting the mode of operation of the device 1 according to the requirements.

More specifically, the valve means 21 comprise a respective valve for each conduit and configurable between an open position wherein the inlet portion 17 is in fluid communication with the outlet portion 18 and a closed position wherein the communication between the inlet portion 17 and the outlet portion 18 is interrupted. Figure 1a shows that the valve means 21 preferably comprise three valves each located along a respective conduit. Moreover, the valve means 21 comprise a control unit (not illustrated in the accompanying drawings) connected to each valve and configured to send to each valve a respective opening or closing signal. Preferably, the control unit comprises a communication interface with a user for controlling the transmission of the opening and closing signals. More specifically, the interface is configured to graphically show three different symbols each of which associated with a respective operating mode to allow the user to select one of the modes. Obviously, each operating mode corresponds with a respective configuration of the valves. For example, in the operating mode relative to the odour reducing, the control unit sends an opening signal to the valve of the first conduit 16 in such a way as to allow the transit of the first fluid towards the first group of nozzles 10.

Similarly, in the operating mode relative to the dust reducing, the control unit sends an opening signal to the valve of the second conduit 19 in such a way as to allow the transit of the second fluid towards the second group of nozzles 11.

Lastly, in the operating mode relative to the flame mitigating, the control unit is configured for sending an opening signal to the valve of the third conduit 20 in such a way as to allow the transit of the third fluid towards the third group of nozzles 12.

Further, it should be noted that each fluid of this invention may be fed in the inlet portion 17 of a respective conduit already comprising the respective solution, or each inlet portion 17 may be connected to a source of liquid (preferably water) and the mixing with the relative solution occurs along the inlet portion 17 of the conduit.

More specifically, the latter possibility is shown in Figure 1 a.

More in detail, the inlet portion 17 of each conduit extends between a relative first end 22 and a relative second end 23. The first end 22 is connectable to a source of liquid (preferably water) and the second end 23 is in continuation of the respective conduit towards the nozzles.

More in detail, the device comprises a starting conduit 50 positioned upstream of the three conduits 16, 19, 20 and connected to the first ends 22 of the inlet portions 17 of the three conduits 16, 19, 20.

More specifically, the device 1 comprises at least two containment tanks 27 each containing a solution selected amongst the odour reducing solution 24, the dust reducing solution 25 and a flame mitigating solution 26. One containment tank 27 contains a solution different from the solution contained in the other containment tank 27. Each tank is connected to a respective conduit at the inlet portion 17 in such a way as to mix the relative solution with the liquid to form a respective type of fluid.

Preferably, the device 1 comprises three containment tanks 27 containing, respectively, the odour reducing solution 24, the dust reducing solution 25 and the flame mitigating solution 26. It should be noted that each tank 27 is in fluid communication with a single and respective conduit at the inlet portion 17. For example, the tank 27 containing the odour reducing solution 24 is in fluid communication with the first conduit 16, the tank containing the dust reducing solution 25 is in fluid communication with the second conduit 19, the tank 27 containing the flame mitigating solution is in fluid communication with the third conduit 20.

In detail, each containment tank 27 is connected to the inlet portion 17 of a respective conduit by a connecting conduit 28. In addition, the device 1 comprises a dosing pump 29 operatively positioned along the connecting conduit 28 for carrying a predetermined dose of the solution from the containment tank 27 to the inlet portion 17.

In that way, it is possible to connect the conduits together upstream of the respective inlet portions in such a way as to connect them to a source of liquid.

More specifically, each inlet portion 17 comprises a relative opening for entrance of the liquid, positioned at the first end 22, which can be connected to a source of liquid. Preferably, the openings for entrance of the liquid are positioned in fluid communication using a connecting unit (not illustrated in the accompanying drawings) which can in turn be connected to the source of liquid.

In other words, the connecting unit has an inlet connectable to the source of liquid and three outlets each connected to a respective conduit.

Moreover, the device 1 comprises first pumping means 30 operatively interposed along the first conduit 16 for pumping the first fluid at a first pressure value associated with the first mode of operation. In the same manner, the device 1 comprises second pumping means 31 operatively interposed along the second conduit 19 for pumping the second fluid at a second pressure value different from the first pressure value and associated with the second mode of operation. Lastly, the device 1 comprises third pumping means 32 operatively interposed along the third conduit 20 for pumping the third fluid at a third pressure value different from the first pressure value and associated with the third mode of operation.

In effect, each operating mode is associated with a predetermined pressure of the fluid and a predetermined flow rate of the fluid. For this reason, if the liquid fed by the source is not at the required pressure, it is necessary, using pumping means, to raise or adjust the pressure of each fluid.

For example, the first fluid circulates in the first conduit 16 at a pressure of between 40 bar and 80 bar and at a flow rate of between 0.5 and 5 litres per minute.

The second fluid circulates in the second conduit 19 at a pressure of between 10 bar and 20 bar and at a flow rate of between 10 and 100 litres per minute.

The third fluid circulates in the third conduit 20 at a pressure of between 8 bar and 15 bar and at a flow rate of between 200 and 4000 litres per minute.

More specifically, each conduit has a respective internal cross-section for the transit of the fluid. Yet more specifically, each conduit has a respective internal cross-section which is predefined and suitable for the pressure of the fluid circulating in it. In other words, each conduit has a respective internal cross-section area which is different from at least one other conduit depending on the pressure and flow rate of the respective fluid.

It should be noted that the respective pumping means (if present) operate independently from each other.

In an alternative embodiment illustrated in Figure 1b at least two conduits 16, 19, have the relative outlet portion 18 in common (unified outlet portion) and connected to a same unit of nozzles 10, 11, 12. In other words, the outlet portion 18 of the first conduit 16 is the same as the outlet portion 18 of the second conduit 19. In yet other words, the two outlet portions 18 are defined by a single conduit connected to a single group of nozzles.

In this case, the device 1 comprises a hydraulic connecting unit 60 interposed between each inlet portion 17 of the conduits and the unified outlet portion 18. The hydraulic connecting unit 60 is configured to put in fluid communication the unified outlet portion 18 with the inlet portions 17. In other words, the unified outlet portion 18 is in fluid communication with the inlet portions 17 using the hydraulic connecting unit 60.

In that way, it is possible to select by a suitable control of the valve means 21 which fluid (first fluid or second fluid or third fluid) to introduce into the unified outlet portion 18 and, therefore, spray from the same group of nozzles. In other words, the group of nozzles in common with the conduits sprays the fluid which has been selected upstream by the valve means 21. Figure 1b shows the alternative embodiment in an alternative form wherein the three conduits 16, 19, 20 have the respective outlet portions 18 unified and connected to the hydraulic connecting unit 60. In other words, the three inlet portions 17 are in fluid communication with the unified outlet portion 18 to introduce, on command, the respective fluids towards the same group of nozzles.

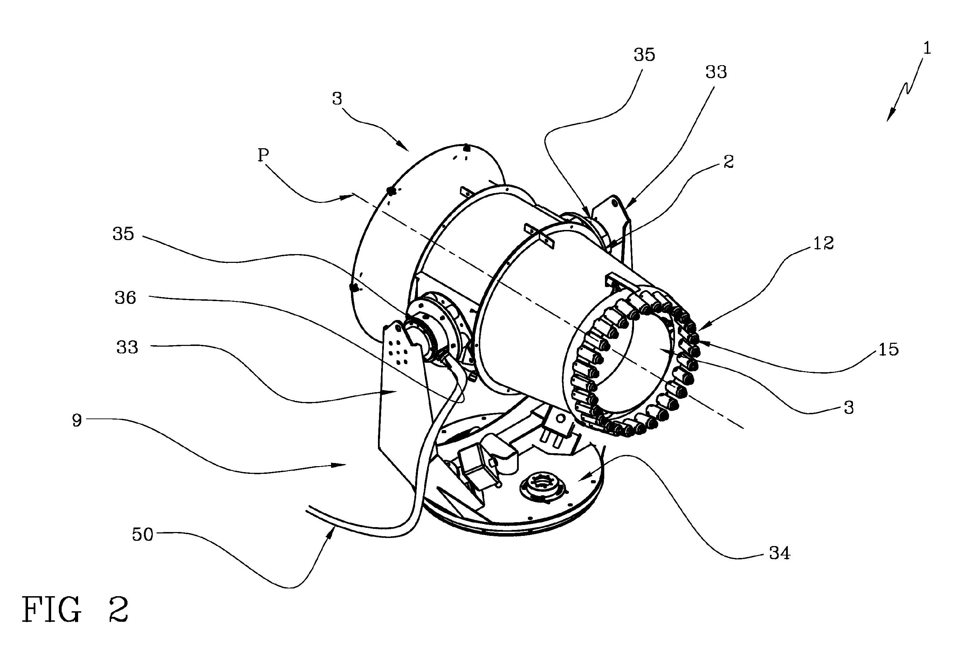

Similarly to that just described above, each unified outlet portion 18 is connectable to a respective group of nozzles. More specifically, each unified outlet portion 18 can be connected to at least two inlet portions 17 of respective conduits to select the fluid to be fed to the group of nozzles. Moreover, in accordance with the alternative embodiment shown in Figure 2, the device 1 comprises a supporting structure 9 on which the tubular body 2 is mounted. The supporting structure 9 can comprise a pair of uprights 33 which support laterally the tubular body 2 and a supporting base 34. Alternatively, in a configuration not illustrated, the supporting structure 9 can comprise a single arm that rises from a supporting base 34 and which supports the cannon from below.

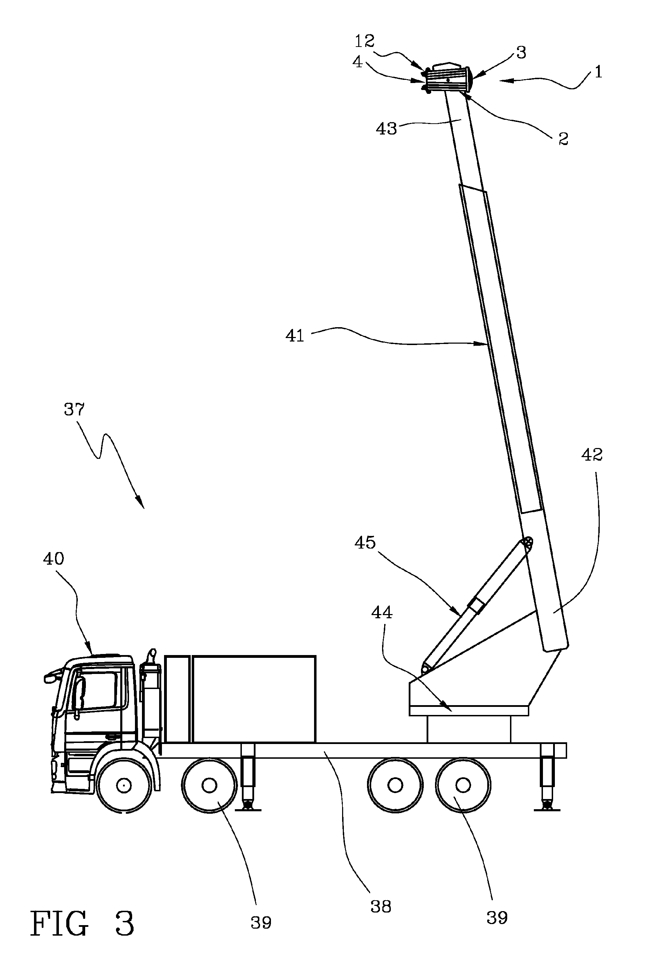

Alternatively, the supporting structure 9 can be defined by a portion of another structure on which the tubular body 2 is mounted. For example, the portion could be a part of a vehicle on which the tubular body 2 is mounted (Figure 3). More in detail, the uprights can be defined by panels, bars or other on which the tubular body 2 is mounted.

Moreover, the device 1 comprises means for orientation, not illustrated, of the tubular body 2 which is operatively connected to the latter to orient the tubular body 2 in the desired direction.

In the preferred embodiment, the orientation means allow the tubular body 2 to perform a pitching rotation about a horizontal axis and a swinging rotation about a vertical axis.

More specifically, in the preferred configuration, illustrated in Figure 2, the tubular body 2 is rotationally connected to the uprights 33.

Preferably, this rotatable coupling is achieved by a rotational joint 35 interposed between each upright 33 and the tubular body 2. More specifically, the rotational joint 35 is of a hydraulic type and allows the transit of a liquid from the outside of the tubular body 2 to the inside of it. More in detail, as shown in Figure 3, the rotational joint 35 comprises a relative inlet 36, positioned outside the tubular body 2, and a relative outlet positioned inside the tubular body 2. The inlet 36 and outlet are in fluid communication with each other.

In that way, the inlet of the rotational joint 35 is, in use, connected to the source of liquid (for example, water) and the three conduits described above branch off from the outlet of the rotational joint 35 towards the three groups of nozzles. In other words, the three conduits, the containment tanks 27, and the valve means 21 are integrated inside the tubular body 2 in such a way as to optimise the overall dimensions of the device 1. More in detail, the starting conduit 50 is positioned upstream of the three conduits 16, 19, 20 and is connected to the inlet 36 of the rotational joint 35.

This invention also relates to a transporting vehicle 37 comprising a supporting frame 38 on which the device 1 described above is mounted. Preferably, the vehicle 37 is motor-driven and comprises movement means 39 for its movement. Even more preferably, the movement means 39 comprise wheels. Alternatively, the movement means 39 can comprise crawler tracks.

Moreover, the vehicle 37 comprises a driver's cab 40 in which an operator can be seated (Figure 3), or comprises a control panel accessible externally by an operator "on foot" or a remote control for controlling the vehicle 37 from a remote location.

In addition, the supporting frame 38 of the vehicle 37 can comprise a movable mechanical arm 41 on which the device 1 is mounted. In that case, the supporting structure 9 of the device 1 is defined by a portion of the mechanical arm 41.

More specifically, the vehicle 37 illustrated comprises, at least partly, a truck of known type.

Moreover, the mechanical arm 41 extends from a relative connecting end 42 connected to the supporting frame 38 to a relative movement end 43 on which the device 1 is mounted. In detail, the mechanical arm 41 can be extended in length and tilted relative to the ground using at least a first actuator 45. Moreover, the vehicle 37 comprises a rotary plate 44 on which the mechanical arm 41 is installed in such a way as to be able to rotate about a vertical axis as required.

Preferably, the device 1 is connected close to the movement end 43 of the mechanical arm 41. Moreover, the vehicle 37 comprises a second actuator operatively connected between the device 1 and the mechanical arm 41 for adjusting the inclination of the direction of propagation P of the device 1 relative to the horizontal.

It should be noted that the mechanical arm 41 is movable between a rest configuration and an active configuration (shown in Figure 3). During the rest configuration, the mechanical arm 41 has a reduced length and is completely positioned close to the rest of the vehicle 37. During the active configuration, the mechanical arm 41 is, at least partly, extended and protrudes from the rest of the vehicle 37.

Operation of this invention derives directly from what is described above.

More specifically, the device 1 according to this invention comprising three different conduits each of which associated with a respective operating mode (reducing odours, reducing dust, mitigating flames) allows the selection of an operating mode using the valve means 21 positioned upstream of the groups of nozzles. For example, controlling the valve means 21 to open the first conduit 16, it is possible to use this invention as device 1 for reducing odours.

For this reason, this invention achieves the preset aims.

More specifically, the invention provides a single device which is able to perform three different actions: reducing dust, reducing odours and mitigating fires. In effect, the presence of three circuits connected to respective groups of nozzles makes it possible to modify the operating mode of the device. More specifically, the presence of the valve means makes it possible to select the desired operating mode.

In that way, it is advantageously possible to have in the same place three different operating modes integrated into a single device.

Moreover, the device can be easily positioned in a place to be treated since a single connection with a source of liquid is sufficient (for the three conduits), thereby avoiding the use of hydraulic or other extensions. Lastly, as the three operating mode are integrated into a single device, the overall cost linked to the production, control and maintenance is less than that of the prior art.

It should also be noted that this invention is relatively easy to produce.

## Claims

1. A device (1) for discharging a jet of fluid, comprising:
a tubular body (2) extending between its own air inlet (3) and its own air outlet (4);
blowing means (5) operatively associated with the tubular body (2) for generating a flow of air along a direction of propagation (P) of the air from the inlet opening (3) to the outlet opening (4);
a first group of nozzles (10) operatively associated with the tubular body (2) for spraying a first fluid towards the flow of air;
a second group of nozzles (11) operatively associated with the tubular body (2) for spraying a second fluid towards the flow of air;
a first conduit (16) for conveying the first fluid extending from a relative inlet portion (17) for the first fluid to a relative outlet portion (18) connected to the first group of nozzles (10) for carrying the first fluid to the first group of nozzles (10);
a second conduit (19) for conveying the second fluid separated from the first conduit (16) and extending from a relative inlet portion (17) for the second fluid to a relative outlet portion (18) connected to the second group of nozzles (11) for carrying the second fluid to the second group of nozzles (11);
valve means (21) interposed between the inlet portion (17) and the outlet portion (18) of each conduit and configured to select the discharging of the first fluid from the first group of nozzles (10) or the second fluid from the second group of nozzles (11) in such a way as to configure the device (1), respectively, in a first operating mode or in a second operating mode; the inlet portion (17) of each conduit being connectable to a source of liquid;
**characterised in that**, it comprises at least two containment tanks (27) each designed to contain a respective solution different from the solution contained in the other tank and selected amongst an odour reducing solution (24), a dust reducing solution (25) and a flame mitigating solution (26); each tank (27) being connected to a respective conduit at the inlet portion (17) in such a way as to mix the relative solution with the liquid to form the first fluid or the second fluid.

2. The device (1) according to claim 1, **characterised in that** the device (1) comprises three containment tanks (27) designed to contain, respectively, the odour reducing solution (24), the dust reducing solution (25) and the flame mitigating solution (26); each tank (27) being in fluid communication with a single and respective conduit at the inlet portion (17).

3. The device (1) according to any one of the preceding claims, **characterised in that** it comprises a third group of nozzles (12) operatively associated with the tubular body (2) for spraying a third fluid towards the flow of air; the device (1) also comprising a third conduit (20) for conveying the third fluid separated from the first conduit (16) and from the second conduit (19) and extending from a relative inlet portion (17) of the third fluid to a relative outlet portion (18) connected to the third group of nozzles (12) for carrying the third fluid to the third group of nozzles (12); the valve means (21) being interposed between the inlet portion (17) and the outlet portion (18) of each conduit and configured to select the discharging of the first fluid from the first group of nozzles (10) or of the second fluid from the second group of nozzles (11) or of the third fluid from the third group of nozzles (12) in such a way as to configure the device (1) respectively in the first mode of operation or in the second mode of operation or in a third mode of operation.

4. The device (1) according to any one of the preceding claims, **characterised in that** the group of nozzles are positioned inside the tubular body (2) and downstream of the blowing means (5) according to the direction of propagation (P) of the air or outside the tubular body (2) around the outlet opening (4).

5. The device (1) according to any one of the preceding claims, **characterised in that** at least one group of nozzles is positioned inside the tubular body (2) and downstream of the blowing means (5) according to the direction of propagation (P) of the air; at least one other group of nozzles being positioned outside the tubular body (2) around the outlet opening (4).

6. The device (1) according to claim 5, **characterised in that** it comprises a supporting head (13) for each group of nozzles located inside the tubular body (2); the supporting head (13) being supported by a plurality of supporting wings (14) extending radially from it towards the tubular body (2) and connected to the latter.

7. The device (1) according to claim 6, **characterised in that** the supporting head (13) is positioned centrally with respect to the tubular body (2) along a direction transversal to the direction of propagation (P); the supporting head (13) being suspended in the air inside the tubular body 2

8. The device (1) according to any one of the preceding claims dependent on claim 3, **characterised in that** the first group of nozzles (10) is positioned inside the tubular body (2) for discharging the first fluid comprising the odour reducing solution (24); the second group of nozzles (11) being positioned inside the tubular body (2) for discharging the second fluid comprising the dust removing solution (25); the third group of nozzles (12) being positioned outside the tubular body (2) around the outlet opening (4) for discharging the third fluid comprising the flames mitigating solution (26).

9. The device (1) according to any one of the preceding claims, **characterised in that** each containment tank (27) is connected to the inlet portion (17) of a respective conduit by a connecting conduit (28); the device (1) comprising a dosing pump (29) operatively positioned along the connecting conduit (28) for carrying a predetermined dose of the solution from the containment tank (27) to the inlet portion (17).

10. The device (1) according to any one of the preceding claims, **characterised in that** each inlet portion (17) comprises a relative opening for entrance of the liquid which can be connected to a source of liquid; the opening for entrance of the liquid being in fluid communication using a connecting unit which can in turn be connected to the source of liquid.

11. The device (1) according to any one of the preceding claims, **characterised in that** it comprises first pumping means (30) operatively interposed along the first conduit (16) for pumping the first fluid at a first pressure value associated with the first mode of operation and second pumping means (31) operatively interposed along the second conduit (19) for pumping the second fluid at a second pressure value different from the first pressure value and associated with the second mode of operation.

12. The device (1) according to any one of the preceding claims, **characterised in that** the outlet portions (18) of two conduits (16, 19) are joined together in a same conduit and are connected to a single group of nozzles (10, 11); the inlet portions (17) of the conduits being connected to a hydraulic connecting unit (60) in turn connected to the unified outlet portions (18) for the transit of the fluid selected by the valve means (21) towards the group of nozzles.

13. The device (1) according to any one of the preceding claims, **characterised in that** the valve means (21) comprise a respective valve for each conduit and configurable between an open position, wherein the inlet portion (17) is in fluid communication with the outlet portion (18) and a closed position wherein the communication between the inlet portion (17) and the outlet portion (18) is interrupted.

14. The device (1) according to any one of the preceding claims, **characterised in that** it comprises a supporting structure (9) on which the tubular body (2) is mounted and comprising a pair of uprights (33) which laterally support the tubular body (2) and a supporting base (34); the tubular body (2) being rotationally connected to the uprights (33) by a rotational joint (35) interposed between each upright (33) and the tubular body (2); the rotational joint (35) being of a hydraulic type and comprising its own inlet (36), positioned outside the tubular body (2), and its own outlet positioned inside the tubular body (2) and in fluid communication with the inlet (36); the inlet (36) of the rotational joint (35) being connectable to the source of liquid and the conduits branching from the outlet of the rotational joint (35) towards the groups of nozzles.

15. A transporting vehicle (37) comprising a supporting frame (38) on which is mounted the device (1) according to any one of the preceding claims.

## Patentansprüche

1. Vorrichtung (1) zum Entladen eines Flüssigkeitsstrahls, umfassend:
einen rohrförmigen Körper (2), der sich zwischen seinem eigenen Lufteinlass (3) und seinem eigenen Luftauslass (4) erstreckt;
Blasmittel (5), die betriebswirksam mit dem rohrförmigen Körper (2) verbunden sind, um einen Luftstrom entlang einer Ausbreitungsrichtung (P) der Luft von der Einlassöffnung (3) zur Auslassöffnung (4) zu erzeugen;
eine erste Düsengruppe (10), die betriebswirksam mit dem rohrförmigen Körper (2) verbunden ist, um eine erste Flüssigkeit in Richtung des Luftstroms zu sprühen;
eine zweite Düsengruppe (11), die betriebswirksam mit dem rohrförmigen Körper (2) verbunden ist, um eine zweite Flüssigkeit in Richtung des Luftstroms zu sprühen;
eine erste Leitung (16), um die erste Flüssigkeit zu fördern, die sich von einem entsprechenden Einlassabschnitt (17) für die erste Flüssigkeit zu einem entsprechenden Auslassabschnitt (18) erstreckt, angeschlossen an die erste Düsengruppe (10), um die erste Flüssigkeit zur ersten Düsengruppe (10) zu fördern;
eine zweite Leitung (19), um die zweite Flüssigkeit zu fördern, die von der ersten Leitung (16) getrennt ist und sich von einem entsprechenden Einlassabschnitt (17) für die zweite Flüssigkeit zu einem entsprechenden Auslassabschnitt (18) erstreckt, angeschlossen an die zweite Düsengruppe (11), um die zweite Flüssigkeit zur zweiten Düsengruppe (11) zu fördern;
Ventilmittel (21), die zwischen dem Einlassabschnitt (17) und dem Auslassabschnitt (18) einer jeden Leitung eingesetzt und ausgelegt sind, um das Entladen der ersten Flüssigkeit aus der ersten Düsengruppe (10) oder der zweiten Flüssigkeit aus der zweiten Düsengruppe (11) auszuwählen, sodass die Vorrichtung (1) jeweils in einem ersten Betriebsmodus oder einem zweiten Betriebsmodus ausgelegt ist, wobei der Einlassabschnitt (17) einer jeden Leitung an eine Flüssigkeitsquelle angeschlossen werden kann, **dadurch gekennzeichnet, dass** sie mindestens zwei Behältertanks (27) umfasst, die jeweils ausgestaltet sind, um eine jeweilige Lösung zu enthalten, die sich von der im anderen Tank enthaltenen Lösung unterscheidet und ausgewählt ist aus einer geruchsreduzierenden Lösung (24), einer staubreduzierenden Lösung (25) und einer flammenabschwächenden Lösung (26), wobei jeder Tank (27) an eine jeweilige Leitung am Einlassabschnitt (17) angeschlossen ist, sodass die entsprechende Lösung mit dem Fluid vermischt wird, um die erste Flüssigkeit oder die zweite Flüssigkeit zu bilden.

2. Vorrichtung (1) nach Anspruch 1, **dadurch gekennzeichnet, dass** die Vorrichtung (1) drei Behältertanks (27) umfasst, die ausgestaltet sind, um jeweils die geruchsreduzierende Lösung (24), die staubreduzierende Lösung (25) und die flammenabschwächende Lösung (26) zu enthalten, wobei jeder Tank (27) in Fluidkommunikation mit einer einzelnen und jeweiligen Leitung am Einlassabschnitt (17) steht.

3. Vorrichtung (1) nach einem der vorhergehenden Ansprüche, **dadurch gekennzeichnet, dass** sie eine dritte Düsengruppe (12) umfasst, die betriebswirksam mit dem rohrförmigen Körper (2) verbunden ist, um eine dritte Flüssigkeit in Richtung des Luftstroms zu sprühen; wobei die Vorrichtung (1) auch eine dritte Leitung (20) umfasst, um die dritte Flüssigkeit zu fördern, die von der ersten Leitung (16) und der zweiten Leitung (19) getrennt ist und sich von einem entsprechenden Einlassabschnitt (17) der dritten Flüssigkeit zu einem entsprechenden Auslassabschnitt (18) erstreckt, angeschlossen an die dritte Düsengruppe (12), um die dritte Flüssigkeit zur dritten Düsengruppe (12) zu fördern; wobei die Ventilmittel (21) zwischen dem Einlassabschnitt (17) und dem Auslassabschnitt (18) einer jeden Leitung eingesetzt und ausgelegt sind, um das Entladen der ersten Flüssigkeit aus der ersten Düsengruppe (10) oder der zweiten Flüssigkeit aus der zweiten Düsengruppe (11) oder der dritten Flüssigkeit aus der dritten Düsengruppe (12) auszuwählen, sodass die Vorrichtung (1) jeweils im ersten Betriebsmodus oder im zweiten Betriebsmodus oder im dritten Betriebsmodus ausgelegt ist.

4. Vorrichtung (1) nach einem der vorhergehenden Ansprüche, **dadurch gekennzeichnet, dass** die Düsengruppe im rohrförmigen Körper (2) und nach den Blasmitteln (5) gemäß der Ausbreitungsrichtung (P) der Luft oder außerhalb des rohrförmigen Körpers (2) rund um die Einlassöffnung (4) positioniert ist.

5. Vorrichtung (1) nach einem der vorhergehenden Ansprüche, **dadurch gekennzeichnet, dass** mindestens eine Düsengruppe im rohrförmigen Körper (2) und nach den Blasmitteln (5) gemäß der Ausbreitungsrichtung (P) der Luft positioniert ist, wobei mindestens eine andere Düsengruppe außerhalb des rohrförmigen Körpers (2) rund um die Einlassöffnung (4) positioniert ist.

6. Vorrichtung (1) nach Anspruch 5, **dadurch gekennzeichnet, dass** sie einen Halterungskopf (13) für jede Düsengruppe umfasst, befindlich im rohrförmigen Körper (2), wobei der Halterungskopf (13) durch eine Vielzahl an Halterungsflügeln (14) gehalten wird, die sich radial davon zum rohrförmigen Körper (2) erstrecken und an diesen angeschlossen sind.

7. Vorrichtung (1) nach Anspruch 6, **dadurch gekennzeichnet, dass** der Halterungskopf (13) mittig zum rohrförmigen Körper (2) entlang einer Richtung positioniert ist, die quer zur Ausbreitungsrichtung (P) verläuft, wobei der Halterungskopf (13) im rohrförmigen Körper (2) in der Luft schwebend angeordnet ist.

8. Vorrichtung (1) nach einem der vorhergehenden Ansprüche, die von Anspruch 3 abhängig sind, **dadurch gekennzeichnet, dass** die erste Düsengruppe (10) im rohrförmigen Körper (2) positioniert ist, um die erste Flüssigkeit zu entladen, die die geruchsreduzierende Lösung (24) umfasst, wobei die zweite Düsengruppe (11) im rohrförmigen Körper (2) positioniert ist, um die zweite Flüssigkeit zu entladen, die die entstaubende Lösung (25) umfasst, wobei die dritte Düsengruppe (12) außerhalb des rohrförmigen Körpers (2) rund um die Auslassöffnung (4) positioniert ist, um die dritte Flüssigkeit zu entladen, die die flammenabschwächende Lösung (26) umfasst.

9. Vorrichtung (1) nach einem der vorhergehenden Abschnitte, **dadurch gekennzeichnet, dass** jeder Behältertank (27) am Einlassabschnitt (17) der jeweiligen Leitung durch eine Anschlussleitung (28) angeschlossen ist, wobei die Vorrichtung (1) eine Dosierpumpe (29) umfasst, die betriebswirksam entlang der Anschlussleitung (28) positioniert ist, um eine vorgegebene Dosis an Lösung vom Behältertank (27) zum Einlassabschnitt (17) zu fördern.

10. Vorrichtung (1) nach einem der vorhergehenden Ansprüche, **dadurch gekennzeichnet, dass** ein jeder Einlassabschnitt (17) eine entsprechende Öffnung für den Eintritt des Fluids umfasst, die an eine Fluidquelle angeschlossen werden kann, wobei die Öffnung für den Eintritt des Fluids in Fluidkommunikation steht, und zwar unter Nutzung einer Anschlusseinheit, die wiederum an die Fluidquelle angeschlossen werden kann.

11. Vorrichtung (1) nach einem der vorhergehenden Ansprüche, **dadurch gekennzeichnet, dass** sie erste Pumpenmittel (30) umfasst, die betriebswirksam entlang der ersten Leitung (16) eingesetzt sind, um die erste Flüssigkeit bei einem ersten Druckwert, verbunden mit dem ersten Betriebsmodus, zu pumpen, und zweite Pumpenmittel (31), die betriebswirksam entlang der zweiten Leitung (19) eingesetzt sind, um die zweite Flüssigkeit bei einem zweiten Druckwert zu pumpen, der sich vom ersten Druckwert unterscheiden, und verbunden mit dem zweiten Betriebsmodus.

12. Vorrichtung (1) nach einem der vorhergehenden Ansprüche, **dadurch gekennzeichnet, dass** die Auslassabschnitte (18) zweier Leitungen (16, 19) in einer selben Leitung zusammengefügt sind und an eine einzelne Düsengruppe (10, 11) angeschlossen sind, wobei die Einlassabschnitte (17) der Leitungen an eine hydraulische Anschlusseinheit (60) angeschlossen sind, die wiederum an die vereinheitlichten Auslassabschnitte (18) angeschlossen ist, für das Durchlaufen der von den Ventilmitteln (21) ausgewählten Flüssigkeit zur Düsengruppe.

13. Vorrichtung (1) nach einem der vorhergehenden Abschnitte, **dadurch gekennzeichnet, dass** die Ventilmittel (21) ein jeweiliges Ventil für eine jede Leitung umfassen und zwischen einer offenen Position, in der der Einlassabschnitt (17) in Fluidkommunikation mit dem Auslassabschnitt (18) steht, und einer geschlossenen Position, in der die Kommunikation zwischen dem Einlassabschnitt (17) und dem Auslassabschnitt (18) unterbrochen ist, konfigurierbar sind.

14. Vorrichtung (1) nach einem der vorhergehenden Ansprüche, **dadurch gekennzeichnet, dass** sie eine Halterungsgestell (9) umfasst, auf dem der rohrförmige Körper (2) montiert ist, umfassend ein Paar Pfosten (33), die den rohrförmigen Körper (2) seitlich tragen, und eine Halterungsbasis (34), wobei der rohrförmige Körper (2) drehbar an die Pfosten (33) durch ein Drehgelenk (35) angeschlossen ist, das zwischen jedem Pfosten (33) und dem rohrförmigen Körper (2) eingesetzt ist, wobei das Drehgelenk (35) vom hydraulischen Typ ist und einen eigenen Einlass (36) umfasst, positioniert außerhalb des rohrförmigen Körpers (2), und einen eigenen Auslass, positioniert im rohrförmigen Körper (2) und in Fluidkommunikation mit dem Einlass (36), wobei der Einlass (36) des Drehgelenks (35) an die Fluidquelle angeschlossen werden kann und die Leitungen vom Auslass des Drehgelenks (35) zu den Düsengruppen abzweigen.

15. Transportfahrzeug (37), umfassend einen Halterungsrahmen (38), auf dem die Vorrichtung (1) nach einem der vorhergehenden Ansprüche montiert ist.

## Revendications

1. Dispositif (1) pour décharger un jet de fluide, comprenant :
un corps tubulaire (2) se développant entre sa propre entrée d'air (3) et sa propre sortie d'air (4) ;
des moyens de soufflage (5) associés fonctionnellement au corps tubulaire (2) pour générer un flux d'air le long d'une direction de propagation (P) de l'air de l'ouverture d'entrée (3) à l'ouverture de sortie (4) ;
un premier groupe de buses (10) fonctionnellement associées au corps tubulaire (2) pour vaporiser un premier fluide vers le flux d'air ;
un second groupe de buses (11) fonctionnellement associées au corps tubulaire (2) pour vaporiser un second fluide vers le flux d'air ;
un premier conduit (16), destiné à acheminer le premier fluide, se développant d'une portion d'entrée (17) correspondante pour le premier fluide à une portion de sortie (18) correspondante reliée au premier groupe de buses (10) pour transporter le premier fluide au premier groupe de buses (10) ;
un second conduit (19), destiné à acheminer le second fluide, séparé du premier conduit (16) et se développant à partir d'une portion d'entrée (17) correspondante pour le second fluide à une portion de sortie (18) correspondante reliée au second groupe de buses (11) pour transporter le second fluide au second groupe de buses (11) ;
des moyens de valve (21) interposés entre la portion d'entrée (17) et la portion de sortie (18) de chaque conduit et configurés pour sélectionner le déchargement du premier fluide à partir du premier groupe de buses (10) ou du second fluide à partir du second groupe de buses (11) de manière à configurer le dispositif (1), respectivement, dans un premier mode de fonctionnement ou dans un second mode de fonctionnement ; la portion d'entrée (17) de chaque conduit pouvant être reliée à une source de liquide ; **caractérisé en ce qu'**il comprend au moins deux réservoirs de contenance (27) chacun conçu pour contenir une solution correspondante différente de la solution contenue dans l'autre réservoir et sélectionnée parmi une solution réductrice d'odeurs (24), une solution réductrice de poussières (25) et une solution d'atténuation de flammes (26) ;
chaque réservoir (27) étant relié à un conduit respectif au niveau de la portion d'entrée (17) de manière à mélanger la solution correspondante au liquide pour former le premier fluide ou le second fluide.

2. Dispositif (1) selon la revendication 1, **caractérisé en ce que** le dispositif (1) comprend trois réservoirs de contenance (27) conçus pour contenir, respectivement, la solution réductrice d'odeurs (24), la solution réductrice de poussières (25) et la solution d'atténuation de flammes (26) ; chaque réservoir (27) étant en communication fluidique avec un conduit unique et correspondant au niveau de la portion d'entrée (17).

3. Dispositif (1) selon l'une quelconque des revendications précédentes, **caractérisé en ce qu'**il comprend un troisième groupe de buses (12) fonctionnellement associées au corps tubulaire (2) pour vaporiser un troisième fluide vers le flux d'air ; le dispositif (1) comprenant aussi un troisième conduit (20), pour acheminer le troisième fluide, séparé du premier conduit (16) et du second conduit (19) et se développant à partir d'une portion d'entrée (17) correspondante du troisième fluide à une portion de sortie (18) correspondante reliée au troisième groupe de buses (12) pour transporter le troisième fluide au troisième groupe de buses (12) ; les moyens de valve (21) étant interposés entre la portion d'entrée (17) et la portion de sortie (18) de chaque conduit et configurés pour sélectionner le déchargement du premier fluide à partir du premier groupe de buses (10) ou du second fluide à partir du second groupe de buses (11) ou du troisième fluide à partir du troisième groupe de buses (12) de manière à configurer le dispositif (1), respectivement, dans le premier mode de fonctionnement ou dans le second mode de fonctionnement ou dans un troisième mode de fonctionnement.

4. Dispositif (1) selon l'une quelconque des revendications précédentes, **caractérisé en ce que** les groupes de buses sont positionnés à l'intérieur du corps tubulaire (2) et en aval des moyens de soufflage (5) selon la direction de propagation (P) de l'air ou à l'extérieur du corps tubulaire (2) autour de l'ouverture de sortie (4).

5. Dispositif (1) selon l'une quelconque des revendications précédentes, **caractérisé en ce qu'**au moins un groupe de buses est positionné à l'intérieur du corps tubulaire (2) et en aval des moyens de soufflage (5) selon la direction de propagation (P) de l'air ; au moins un autre groupe de buses étant positionné à l'extérieur du corps tubulaire (2) autour de l'ouverture de sortie (4).

6. Dispositif (1) selon la revendication 5, **caractérisé en ce qu'**il comprend une tête de support (13) pour chaque groupe de buses situé à l'intérieur du corps tubulaire (2) ; la tête de support (13) étant soutenue par une pluralité d'ailes de support (14) se développant radialement à partir de celle-ci vers le corps tubulaire (2) et reliées à cette dernière.

7. Dispositif (1) selon la revendication 6, **caractérisé en ce que** la tête de support (13) est positionnée centralement par rapport au corps tubulaire (2) le long d'une direction transversale à la direction de propagation (P) ; la tête de support (13) étant suspendue en l'air à l'intérieur du corps tubulaire.

8. Dispositif (1) selon l'une quelconque des revendications précédentes dépendantes de la revendication 3, **caractérisé en ce que** le premier groupe de buses (10) est positionné à l'intérieur du corps tubulaire (2) pour décharger le premier fluide comprenant la solution réductrice d'odeurs (24) ; le second groupe de buses (11) étant positionné à l'intérieur du corps tubulaire (2) pour décharger le second fluide comprenant la solution dépoussiérante (25) ; le troisième groupe de buses (12) étant positionné à l'extérieur du corps tubulaire (2) autour de l'ouverture de sortie (4) pour décharger le troisième fluide comprenant la solution d'atténuation de flammes (26).

9. Dispositif (1) selon l'une quelconque des revendications précédentes, **caractérisé en ce que** chaque réservoir de contenance (27) est relié à une portion d'entrée (17) d'un conduit respectif par un conduit de raccordement (28) ; le dispositif (1) comprenant une pompe doseuse (29) fonctionnellement positionnée le long du conduit de raccordement (28) pour transporter une quantité prédéterminée de la solution du réservoir de contenance (27) vers la portion d'entrée (17).

10. Dispositif (1) selon l'une quelconque des revendications précédentes, **caractérisé en ce que** chaque portion d'entrée (17) comprend une ouverture d'entrée correspondante du liquide pouvant être reliée à une source de liquide ; l'ouverture d'entrée du liquide étant en communication fluidique en utilisant une unité de raccordement pouvant être, à son tour, reliée à la source de liquide.

11. Dispositif (1) selon l'une quelconque des revendications précédentes, **caractérisé en ce qu'**il comprend des premiers moyens de pompage (30) fonctionnellement interposés le long du premier conduit (16) pour pomper le premier fluide à une première valeur de pression associée au premier mode de fonctionnement et des seconds moyens de pompage (31) fonctionnellement interposés le long du second conduit (19) pour pomper le second fluide à une seconde valeur de pression différente de la première valeur de pression et associée au second mode de fonctionnement.

12. Dispositif (1) selon l'une quelconque des revendications précédentes, **caractérisé en ce que** les portions de sortie (18) des deux conduits (16, 19) sont unies l'une à l'autre dans un même conduit et sont reliées à un unique groupe de buses (10, 11) ; les portions d'entrée (17) des conduits étant reliées à une unité de raccordement hydraulique (60) à son tour reliée aux portions de sortie unifiées (18) pour le passage du fluide, sélectionné par les moyens de valve (21), vers le groupe de buses.

13. Dispositif (1) selon l'une quelconque des revendications précédentes, **caractérisé en ce que** les moyens de valve (21) comprennent une valve respective pour chaque conduit et pouvant être configurée entre une position d'ouverture, dans laquelle la portion d'entrée (17) est en communication fluidique avec la portion de sortie (18) et une position de fermeture, dans laquelle la communication entre la portion d'entrée (17) et la portion de sortie (18) est interrompue.

14. Dispositif (1) selon l'une quelconque des revendications précédentes, **caractérisé en ce qu'**il comprend une structure de support (9) sur laquelle est monté le corps tubulaire (2) et comprenant une paire de montants (33) qui supportent latéralement le corps tubulaire (2) et une base de support (34) ; le corps tubulaire (2) étant relié en rotation aux montants (33) par un joint rotatif (35) interposé entre chaque montant (33) et le corps tubulaire (2) ; le joint rotatif (35) étant d'un type hydraulique et comprenant sa propre entré (36) positionnée à l'extérieur du corps tubulaire (2), et sa propre sortie positionnée à l'intérieur du corps tubulaire (2) et en communication fluidique avec l'entrée (36) ; l'entrée (36) du joint rotatif (35) pouvant être reliée à la source de liquide et aux conduits se ramifiant à partir de la sortie du joint rotatif (35) vers les groupes de buses.

15. Véhicule de transport (37) comprenant un châssis de support (38) sur lequel est monté le dispositif (1) selon l'une quelconque des revendications précédentes.
